# EUROPÄISCHE PATENTANMELDUNG

(11) **EP 0 872 711 A2**
(43) Veröffentlichungstag der Anmeldung: **21.10.1998**
(21) Anmeldenummer: 98106791.1
(22) Anmeldetag: 15.04.1998
(51) Int. Cl.: G01C 21/16, G01C 19/72, G01C 19/38

(54) **Inertialsensor-Anordnung**

(30) Priorität: 17.04.1997 DE 19716026
(71) Anmelder: Bodenseewerk Gerätetechnik GmbH, 88662 Überlingen (DE)
(72) Erfinder: Schneider, Alfred, 88662 Überlingen (DE); Bauerbach, Karl, 88696 Owingen (DE); Renker, Horst, 88662 Überlingen (DE); Neumann, Werner, 88696 Owingen (DE)
(74) Vertreter: Weisse, Jürgen, Dipl.-Phys.

(57) **Zusammenfassung**

Eine Inertialsensor-Anordnung weist einen Faserkreisel auf, der auf die Horizontalkomponente der Erddrehrate anspricht. Die Faserspule (46) des Faserkreisels ist auf einem Positionierrahmen (24) angeordnet ist, der gegenüber einem Gehäuse (10) um die Hochachse (z) drehbar gelagert ist. Der Positionierrahmen (24) ist durch Einstellmittel (86) in drei feste, durch mechanische Arretiermittel festgelegte Positionen eindrehbar. Dabei wird aus den erhaltenen Signalen ein Meßwert für den Winkel zwischen einer Referenz-Richtung und Nord gebildet. Zur Bestimmung der Neigung der Inertialsensor-Anordnung sind Neigungssensoren (30,32) Die Faserspule (46) mit dem Positionierrahmen (24) und die beiden Neigungssensoren (30,32) sind an einem starren Sensorblock (16) angeordnet, der thermisch isoliert mit dem Gehäuse (10) verbunden ist.

## Beschreibung

Die europäische Patentanmeldung 97102181.1 betrifft eine Inertialsensor-Anordnung mit einem unter Ausnutzung des Sagnac-Effekts arbeitenden Inertialsensor, der auf die Horizontalkomponente der Erddrehrate anspricht und um eine Hochachse in eine Mehrzahl fester Positionen verdrehbar ist, wobei aus den dabei erhaltenen Signalen durch Signalverarbeitungs-Mittel ein Meßwert für den Winkel zwischen einer Referenz-Richtung und Nord gebildet wird, bei welchem der Inertialsensor von einem Faserkreisel gebildet ist, der Faserkreisel auf einem Positionierrahmen angeordnet ist, der gegenüber einem Gehäuse um die Hochachse drehbar gelagert ist, der Positionierrahmen durch Einstellmittel in drei feste, durch Arretiermittel festgelegte Positionen eindrehbar ist und zur Bestimmung der Neigung der Inertialsensor-Anordnung relativ zu der Horizontalen Neigungssensoren mit zueinander gekreuzten Empfindlichkeitsachsen vorgesehen sind.

Bei der in der vorstehenden Patentanmeldung beschriebenen Konstruktion sind Signalverarbeitungs-Mittel von Leiterkarten mit elektronischen Bauteilen gebildet, welche Boden und Seitenwände eines rechteckigen Innengehäuses bilden. Durch den Boden des Innengehäuses hindurch ragt ein Positionierrahmen in das Innengehäuse hinein. Der Positionierrahmen ist innerhalb des Innengehäuses durch eine Lageranordnung drehbar gelagert. Der Positionierrahmen trägt einen Faserkreisel. Der Positionierrahmen ist um eine Hochachse gegenüber dem Innengehäuse durch einen Stellmotor in drei feste, durch mechanische Rasten definierte Positionen eindrehbar. Die Eingangsachse des Faserkreisels ist zu einer zur Hochachse senkrechten Ebene um einen Elevationswinkel geneigt. Auf das Innengehäuse ist ein am Boden offenes Außengehäuse aufgesetzt. An den die Seitenwände des Innengehäuses bildenden Leiterplatten sind zwei Beschleunigungsmesser mit zueinander senkrechten Empfindlichkeitsachsen fest angebracht.

Bei der Anordnung nach der europäische Patentanmeldung 97102181.1 sind die Beschleunigungsmesser an dem von Leiterplatten gebildeten Innengehäuse angebracht. Der Faserkreisel sitzt an dem drehbar gelagerten Positionierrahmen. Durch thermische Einflüsse infolge der von den Bauteilen entwickelten Wärme können an den Leiterplatten geringfügige Verwindungen eintreten. Diese beeinflussen die relative Lage von Beschleunigungsmessern und Faserkreisel. Dadurch wird wiederum die Messung verfälscht, da durch die Beschleunigungsmesser die Orientierung des Faserkreisels relativ zur Horizontalen bestimmt wird.

Der Erfindung liegt die Aufgabe zugrunde, einen Inertialsensor der vorliegenden Art so auszubilden, daß eine feste Orientierung der Neigungssensoren relativ zu dem Faserkreisel gewährleistet ist.

Erfindungsgemäß wird diese Aufgabe dadurch gelöst, daß die Faserspule des Faserkreisels mit dem Positionierrahmen und die beiden Neigungssensoren an einem starren Sensorblock angeordnet sind, der thermisch isoliert mit dem Gehäuse verbunden ist.

Auf diese Weise sind die Beschleunigungsmesser und der Faserkreisel an ein und demselben Sensorblock angebracht und haben definierte relative Orientierungen. Der Sensorblock ist gegenüber dem Gehäuse thermisch isoliert. Die thermischen Einflüsse des Gehäuses und der wärmeerzeugenden Bauteile können sich nicht störend auswirken.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.
- Fig.1: ist eine auseinandergezogen-perspektivische Darstellung und zeigt den mechanischen Aufbau einer Inertialsensor-Anordnung mit einem Faserkreisel und zwei Beschleunigungsmessern an einem Sensorblock.
- Fig.2: zeigt als Blockschaltbild den Sensorblock und die Signalverarbeitung.
- Fig.3: ist eine schematische Darstellung und zeigt die relativen Orientierungen des Faserkreisels und der Beschleunigungsmesser.

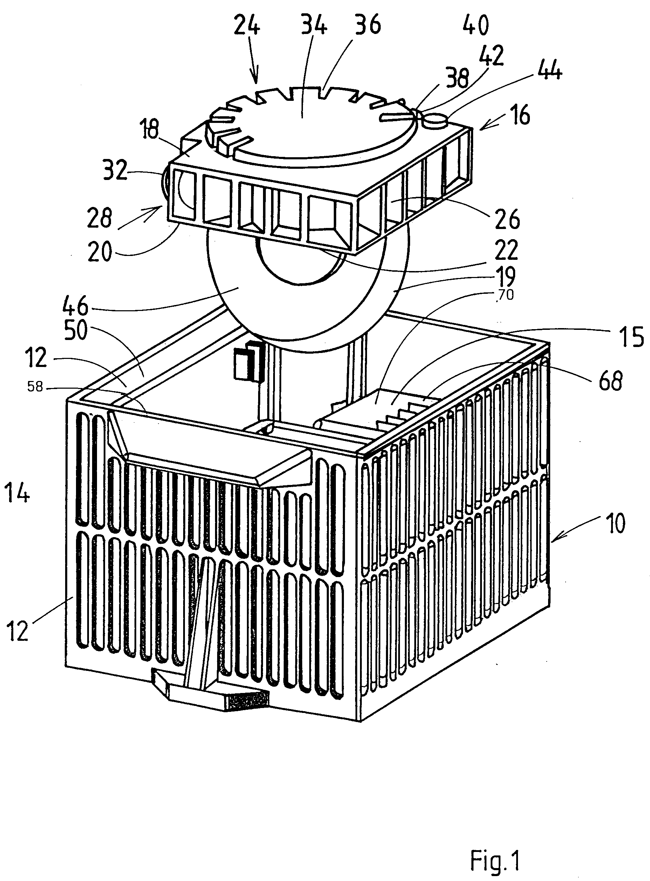

In Fig.1 ist mit 10 ein rechteckiges Gehäuse bezeichnet. Das Gehäuse 10 weist einen nach oben in Fig.1 offenen kastenförmigen Gehäuseunterteil 12 auf, der durch einen in Fig.1 nicht dargestellten Deckel abgeschlossen ist. Das Gehäuse 10 ist auf der Außenseite mit Kühlrippen 14 versehen. In das Gehäuse 10 ist ein Sensorblock 16 eingesetzt. Der Sensorblock 16 ist gegenüber dem Gehäuse 10 mit üblichen Mitteln wärmeisoliert. Der Sensorblock 16 ist starr in dem Gehäuse 10 gehaltert.

Der Sensorblock 16 weist zwei zueinander parallele Platten 18 und 20 auf. Die Platten sind durch ein Lager 22 für einen Positionierrahmen 24 und durch radiale Rippen 26 miteinander verbunden. Auf diese Weise wird eine leichte aber starre Struktur eines Tragkörpers 28 erhalten.

An dem so gebildeten, als Ganzes plattenförmigen Tragkörper 28 sitzen zwei Beschleunigungsmesser 30 und 32, von denen in Fig.1 nur der Beschleunigungsmesser 32 zu sehen ist. Die Beschleunigungsmesser 30 und 32 sitzen in der in Fig.1 linken hinteren Ecke bzw. der linken vorderen Ecke des Tragkörpers 28. Die Empfindlichkeitsachse des Beschleunigungsmessers 30 erstreckt sich parallel zu einer Kante des Tragkörpers 28 von links hinten nach links vorn in Fig.1 (x-Richtung). Die Empfindlichkeitsachse des Beschleunigungsmessers 32 erstreckt sich senkrecht zu der Empfindlichkeitsachse des Beschleunigungsmessers 32 parallel zu der anderen Kante des Tragkörpers 28 von links vorn nach rechts vorn in Fig.1 (y-Richtung).

Der Positionierrahmen 24 ist an dem Tragkörper 28 in dem Lager 22 drehbar gelagert. Der Positionierrahmen 24 weist eine Positionierscheibe 34 auf. Die Positionierscheibe 34 ist parallel zu der in Fig.1 oberen Platte 18 im Abstand von dieser angeordnet. Die Positionierscheibe 34 weist an ihrer Peripherie eine Folge von radialen Schlitzen 36 auf. Auf der Platte 18 sitzt eine Antriebsscheibe 38, die an dem Tragkörper 28 gelagert ist. Die Antriebsscheibe 38 erstreckt sich unter die mit den Schlitzen 36 versehene Peripherie der Positionierscheibe 34. Die Antriebsscheibe 38 trägt zwei um 180° winkelversetzt angeordnete, exzentrische, axiale Stifte oder Rollen 40. und 42. Der Stift oder die Rolle 40 greift in der Position von Fig.1 in einen der Schlitze 36 ein. Die Antriebsscheibe 38 ist mit einem Stellmotor 44 in Antriebsverbindung. Wenn die Antriebsscheibe 38 von dem Stellmotor 44 angetrieben wird, dann dreht der in einen Schlitz 36 eingreifende exzentrische Stift oder die Rolle 40 die Positionierscheibe 34 um einen Schritt weiter. Dabei tritt der andere Stift oder die andere Rolle 42 in den nächstfolgenden Schlitz 36 ein. Bei einer weiteren Drehung der Antriebsscheibe 38 um 180° wird die Positionierscheibe 34 von dem Stift oder der Rolle 42 weiterbewegt, bis dann der Stift die Rolle 40 wieder in den darauffolgenden Schlitz 36 eintritt. Das ist eine Art "Maltesertrieb", bei welchem die Positionierscheibe 34 bei jeder Umdrehung der Antriebsscheibe 38 um einen vorgegebenen Schritt fortgeschaltet wird. Bei der dargestellten Ausführung wird die Positionierscheibe 34 bei zwei Umdrehungen der Antriebsscheibe 38 um 90° fortgeschaltet. Die Positionierscheibe 34 kann auf diese Weise durch jeweils zwei Umdrehungen der Antriebsscheibe 38 aus einer 0°-Stellung in eine 90°-Stellung und eine 180°-Stellung gedreht werden. In jeder der Positionen ist die Positionierscheibe 34 durch die Stifte oder Rollen 40 und 42 in definierter Weise arretiert.

Mit der Positionierscheibe 34 ist auf der in Fig.1 unteren Seite des Tragkörpers 28 die Faserspule 46 eines Faserkreisels verbunden. Die Positionierscheibe 34 zusammen mit der Halterung der Faserspule 46 bilden den in dem Lager 22 gelagerten Positionierrahmen 24. Der Positionierrahmen 24 mit der Faserspule 46 und der Tragkörper 28 mit den Beschleunigungsmessern 30 und 32 bilden den Sensorblock 16. In dem Sensorblock 16 sind die Beschleunigungsmesser 30 und 32 und die Faserspule 46 bei jeder Position der Faserspule starr miteinander verbunden, so daß ihre Signale genau die Position der Faserspule 46 relativ zum Lot angeben. Die relative Lage der Teile wird nicht durch thermische Verformung oder Verwerfung beeinflußt. Der Sensorblock 16 ist mit "hängender" Faserspule 46 in das Gehäuse 12 wärmeisoliert eingesetzt.

Die Meßachse der Faserspule 46 ist gegenüber der zur Hoch- und Drehachse (z-Achse) senkrechten Ebene (x-y-Ebene) um einen Elevationswinkel σ geneigt.

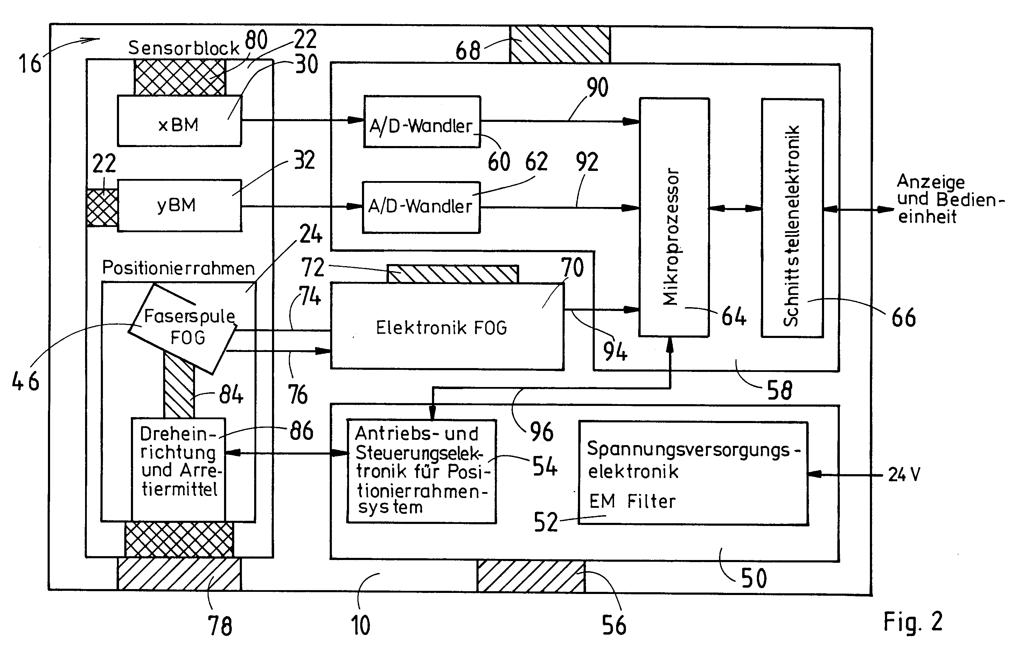

Parallel zu der in Fig.1 linken Seitenwand des Gehäuses 10 sitzt eine Leiterplatte 50. Die Leiterplatte 50 enthält die für die Stromversorgung der Elektronik und der Sensoren erforderlichen Bauteile. Das sind die Bauteile, die in Fig.2 als Block 52 dargestellt sind. Auf der Leiterplatte 50 sitzt weiter die Antriebs- und Steuerelektronik für den Positionierrahmen 24 Diese Bauteile sind in Fig.2 durch einen Block 54 dargestellt. Die Leiterplatte 50 ist mit dem Gehäuse 10 über mechanische Halterungen 56 verbunden.

Parallel zu der in Fig.1 vorderen Seitenwand des Gehäuses 10 ist eine Leiterplatte 58 angeordnet. Die Leiterplatte 58 enthält die Elektronik-Bauteile für die Signalverarbeitung und Steuerung. Darunter sind zwei Analog-Digital-Wandler 60 und 62 (Fig.2) zur Digitalisierung der von den Beschleunigungsmessern 30 bzw. 32 erzeugten Signale. Die Leiterplatte 58 trägt weiterhin eine zentrale Signalverarbeitungs-Einheit in Form eines Mikroprozessors 64. Schließlich sitzt auf der Leiterplatte 58 ein Schnittstellen-Modul 66. Die Leiterplatte 58 ist mittels einer Halterung 68 an dem Gehäuse 10 gehaltert.

Auf der in Fig.1 rechten Seitenwand des Gehäuses 10 sitzt eine dem Faserkreisel zugeordnete Einheit 70, welche alle elektronischen und opto-elektronischen Bauteile des Faserkreisels umfaßt. Diese Einheit 70 ist über mechanische Halterungen 72 fest mit dem Gehäuse 10 verbunden. Die Einheit 70 ist somit nicht mit dem Positionierrahmen 24 verdrehbar. Die Faserspule 46 ist über flexible Lichtleitfasern 74 und 76 mit der Einheit 70 verbunden.

In Fig.2 ist schematisch dargestellt, daß der Sensorblock über eine mechanisch feste aber thermisch isolierende Halterung 78 mit dem Gehäuse 10 verbunden ist. Die Beschleunigungsmesser 30 und 32 sind mechanisch fest mit dem Tragkörper 28 des Sensorblocks 16 verbunden. Das ist in Fig.2 durch Halterungen 80 bzw. 82 angedeutet.

Der Positionierrahmen 24 enthält die Faserspule 46 und eine Halterung 84 für die Faserspule 46 sowie die in Fig.2 durch einen Block 86 dargestellten Einstellmittel 86, die von dem Maltesertrieb (mit Positionierscheibe 34 und Antriebsscheibe 38) und dem Stellmotor 44 gebildet sind.

Die beschriebene Inertialsensor-Anordnung arbeitet wie folgt:

Die Beschleunigungs-Signale der Beschleunigungsmesser 30 und 32 sind über die Analog-Digital-Wandler 60 bzw. 62 und Datenleitungen 90 bzw. 92 auf den Mikroprozessor 64 geschaltet. Der Mikroprozessor 64 erhält weiterhin über eine Datenleitung 94 die Signale des Faserkreisels. Dabei sind die opto-elektronischen Bauteile wie die elektronischen Bauteile des Faserkreisels stationär im Gehäuse angeordnet. Nur die Faserspule 46 wird in die verschiedenen Meßstellungen verdreht. Der Faserkreisel spricht auf Komponenten der Erddrehrate Ω an. Der Mikroprozessor bestimmt daraus zunächst in einem Nordungsvorgang die Abweichung einer Referenzachse, z.B. der y-Achse, von Nord. Diese Information wird über das Schnittstellen-Modul 66 an eine (nicht dargestellte) Bedieneinheit ausgegeben.

Die Antriebs- und Steuerelektronik sorgt dafür, daß der Positionierrahmen 24 nacheinander in die 0°-Stellung, die 90°-Stellung und die 180°-Stellung gedreht wird. Die in jeder dieser Stellungen von dem Faserkreisel gemessenen Meßsignale werden gespeichert. Aus den drei so erhaltenen Meßsignalen des Faserkreisels können bei bekannten Neigungswinkeln, die von den Beschleunigungsmessern geliefert werden, der Sinus und Kosinus des Nordwinkels (zur Bestimmung des Quadranten) sowie die Drift des Faserkreisels berechnet werden. Das erfolgt in dem Mikroprozessor 64, der andererseits auch die Antriebs- und Steuerelektronik ansteuert. Das ist durch die Doppelpfeil-Verbindung 96 angedeutet.

Die Schrägstellung des Faserkreisels gestattet es, auch Drehgeschwindigkeiten um die Hochachse (z-Achse) zu erfassen. Daraus läßt sich laufend ein Kurswinkel berechnen oder ein Signal zur Kurshaltung erzeugen.

Das ist in der europäische Patentanmeldung 97102181.1 näher beschrieben.

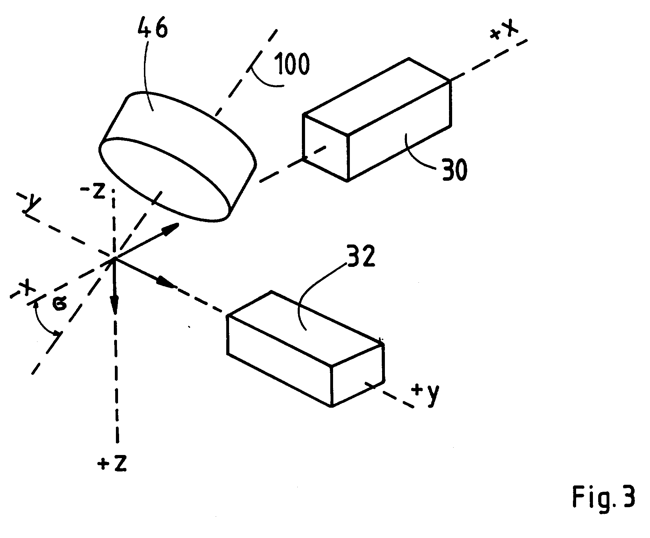

Fig.3 zeigt schematisch die gegenseitige Lage der gehäusefesten Achsen, nämlich der x-Achse, der y-Achse und der z-Achse oder Kochachse, sowie der Meßachse 100 des Faserkreisels, d.h. der Achse der Faserspule. Die Beschleunigungsmesser 30 und 32 leigen mit ihren Empfindlichkeitsachsen in Richtung der x-Achse bzw. der y-Achse.

## Patentansprüche

1. Inertialsensor-Anordnung mit einem unter Ausnutzung des Sagnac-Effekts arbeitenden Inertialsensor, der auf die Horizontalkomponente der Erddrehrate anspricht und um eine Hochachse in eine Mehrzahl fester Positionen verdrehbar ist, wobei aus den dabei erhaltenen Signalen durch Signalverarbeitungs-Mittel ein Meßwert für den Winkel zwischen einer Referenz-Richtung und Nord gebildet wird,
bei welchem
(a) der Inertialsensor von einem Faserkreisel gebildet ist,
(b) die Faserspule (46) des Faserkreisels auf einem Positionierrahmen (24) angeordnet ist, der gegenüber einem Gehäuse (10) um die Hochachse (z) drehbar gelagert ist,
(c) der Positionierrahmen (24) durch Einstellmittel (86) in drei feste, durch Arretiermittel festgelegte Positionen eindrehbar ist und
(d) zur Bestimmung der Neigung der Inertialsensor-Anordnung relativ zu der Horizontalen Neigungssensoren (30,32) mit zueinander gekreuzten Empfindlichkeitsachsen vorgesehen sind. nach der europäische Patentanmeldung 97102181.1
**dadurch gekennzeichnet, daß**
(e) die Faserspule (46) mit dem Positionierrahmen (24) und die beiden Neigungssensoren (30,32) an einem starren Sensorblock (16) angeordnet sind, der thermisch isoliert mit dem Gehäuse (10) verbunden ist.

2. Inertialsensor-Anordnung nach Anspruch 1, **dadurch gekennzeichnet, daß** der Sensorblock (16) mit dem Gehäuse (10) mechanisch fest verbunden ist.

3. Inertialsensor-Anordnung nach Anspruch 2, **dadurch gekennzeichnet, daß**
(a) der Sensorblock (16) einen plattenförmigen steifen Tragkörper (28) aufweist, der starr aber wärmeisolierend in dem Gehäuse (10) gehaltert ist,
(b) die Neigungssensoren (30,32) zueinander senkrecht in dem Tragkörper (28) angeordnet sind,
(c) der Positionierrahmen (24) drehbar in dem Tragkörper (28) gelagert ist und eine auf einer ersten Seite des Tragkörpers (28) angeordnet Positionierscheibe (34) aufweist,
(d) die Faserspule (46) des Faserkreisels auf der entgegengesetzten, zweiten Seite des Tragkörpers (28) angeordnet und mit dem Positionierrahmen (24) verbunden ist, und
(e) die Einstellmittel (86) an dem Tragkörper (28) sitzen und mit der Positionierscheibe (34) zusammenwirken.

4. Inertialsensor-Anordnung nach Anspruch 3, **dadurch gekennzeichnet, daß** die Einstellmittel (86) einen Stellmotor (44) aufweisen, der über ein Getriebe nach Art eines Maltesertriebs mit der Positionierscheibe (34) gekuppelt ist.

5. Inertialsensor-Anordnung nach Anspruch 4, **dadurch gekennzeichnet, daß** das Getriebe eine Folge von radialen Schlitzen (36) an der Peripherie der Positionierscheibe (34) und eine von dem Stellmotor (44) angetriebene, mit einem Paar von exzentrischen, axialen Stiften oder Rollen (40,42) versehene Antriebsscheibe (38) aufweist, wobei die Stifte oder Rollen (40,42) abwechselnd in die radialen Schlitze eingreifen und die Positionierscheibe (34) bei jeder Umdrehung der Antriebsscheibe (38) um einen vorgegebenen Stellwinkel fortschalten.

6. Inertialsensor-Anordnung nach einem der Ansprüche 1 bis 5, **dadurch gekennzeichnet, daß** er Tragkörper (28) von einem Paar von parallelen Platten (18,20) gebildet ist, die durch die Lagerung (20) des Positionierrahmens (24) und um die Lagerung (20) des Positionierrahmens (24) herum über radiale Rippen (26) miteinander verbunden sind.

7. Inertialsensor-Anordnung nach einem der Ansprüche 1 bis 6, **dadurch gekennzeichnet, daß** die elektronischen und optronischen Bauteile des Faserkreisels in einem Faserkreisel-Block (66) angeordnet sind, der an der Wandung des Gehäuses (10) montiert und mit der verdrehbaren Faserspule (46) des Faserkreisels über flexible Lichtleitfasern (74,76) verbunden ist.
